# EUROPEAN PATENT SPECIFICATION

(11) **EP 1 646 175 B1**
(45) Date of publication and mention of the grant of the patent: **07.11.2007**
(21) Application number: 05077824.0
(22) Date of filing: 16.04.2004
(51) Int. Cl.: H04L 9/00, H04L 29/06, H04L 12/28

(54) **Network device and system for authentication and method thereof**
Netzwerkgerät, System und Verfahren zur Authentifizierung
Dispositif de réseau, système et procédé d' authentification

(30) Priority: 16.04.2003 KR 2003024170
(43) Date of publication of application: 12.04.2006
(62) Divisional of application: 04252225.0
(73) Proprietor: Samsung Electronics Co., Ltd., Suwon-si, Gyeonggi-Do (KR)
(72) Inventor: Choi, Cheol-won, Seoul (KR); Yi, Kyoung-hoon, Seoul (KR); Yoon, Hyun-sik, Seoul (KR)
(74) Representative: Robinson, Ian Michael

(56) References cited:
- WO-A-03/010669
- GB-A- 2 366 131
- US-A1- 2002 032 855
- US-A1- 2003 035 544
- YOUNG KIM: "802.11b Wireless LAN Authentication, Encryption, and Security" INTERNET, 31 May 2001 (2001-05-31), XP002250118

## Description

The present invention relates to a network device authentication, and more particularly, to a network device and system for authentication and a method for authenticating network devices using the network device for authentication.

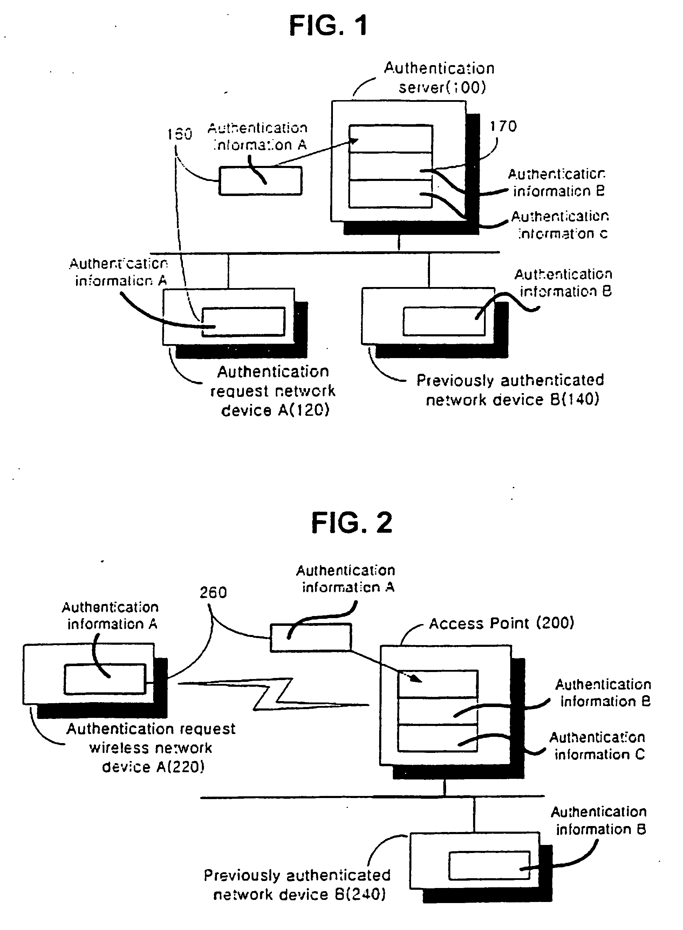

Figure 1 shows a related art authentication process in a wired communication environment. An authentication system for use in the process comprises a network device 120 for requesting authentication, an authentication server 100 for permitting the requested authentication, and a previously authenticated network device 140. Here, a manager registers, within the authentication server 100 and in advance, authentication information 160 regarding a network device 120 to be authenticated. Registered authentication information 170 may include MAC (Medium Access Control) addresses, security keys, SSID (Service Set Identifier) values, etc. of the authentication request network device 120. When the authentication request network device 120 is connected to a network, the authentication information 160 on the authentication request network device 120 is sent to the authentication server 100. Thus, the authentication server 100 confirms the authentication information 160 on the authentication request network device 120 and authenticates the authentication request network device 120.

Figure 2 shows a related art authentication process in a wireless communication environment. An authentication system for use in the process comprises a wireless network device 220 for requesting authentication, an access point 200 for permitting the requested authentication for the wireless network device, and a previously authenticated network device 240. Here, the access point 200 serves to allocate an address to the authentication request wireless network device 220. A manager registers, on the access point 200 and in advance, authentication information 260 regarding the wireless network device 220 to be authenticated as shown in Figure 2. When the authentication request wireless network device 220 requests authentication from the access point 200, the access point 200 confirms the authentication information registered on itself and determines whether to permit the requested authentication.

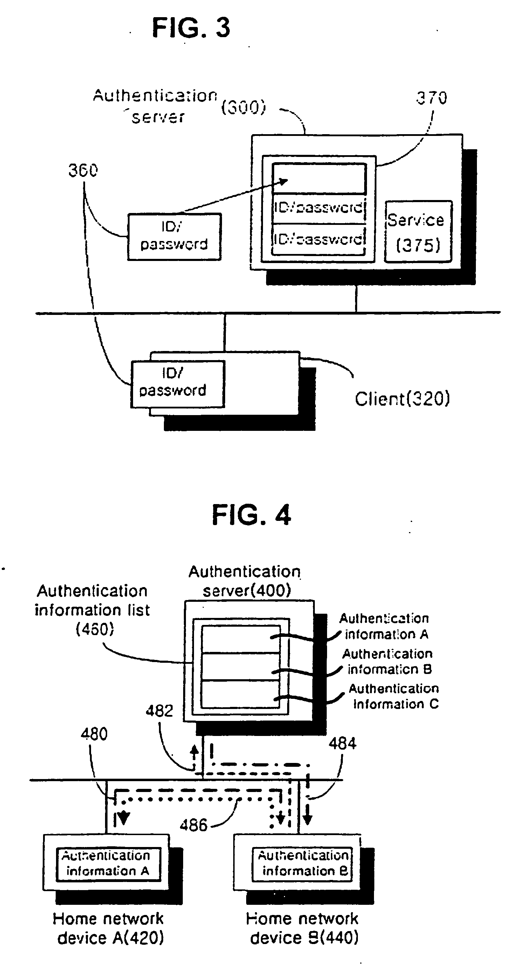

Figure 3 shows a related art authentication process in a client-server environment. An authentication system for use in the process comprises a client 320 for requesting authentication, and an authentication server 300 for providing service 375 to the client 320. The server 300 contains a service 375 that can be provided to the client, and a list 370 of unique IDs and passwords that the client is permitted to use to access the service. Here, a manager registers, on the server 300 and in advance, a set 360 of IDs and passwords used when the client 320 requests authentication. When the client 320 connects to the server 300 and requests authentication by entering its own ID and password, the authentication server 300 confirms the registered list 370 of IDs and passwords to determine whether the authentication and use of the service 375 are permitted.

Figure 4 shows an operation process between authenticated network devices using authentication information registered on an authentication server after authentication has been completed through the process as shown in Figure 1. First, it is assumed that an authentication request network device is a home network device. A home network device A 420 requests connection and use of a service from another home network device B 440, as indicated by an arrow 480. Then, the home network device B 440 requests an authentication server 400 to confirm whether the authentication request home network device A 420 is an authenticated device, as indicated by an arrow 482. Based on an authentication information list 460, the authentication server 400 checks whether the authentication request home network device A 420 is an authenticated device, and informs the check result of the home network device B 440, as indicated by an arrow 484. Then, the home network device B 440 communicates with the home network device A 420 when it is confirmed that the home network device A 420 is authenticated on the basis of the check result.

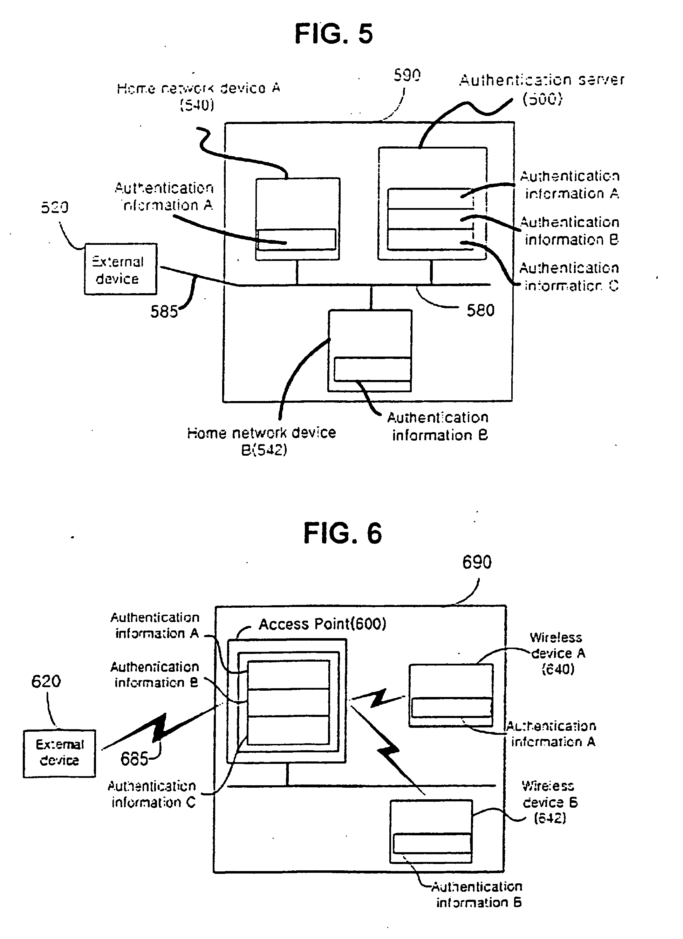

However, the related art authentication methods shown in Figures 1 to 3 suffer from one or more of the following problems:
1. To authenticate network devices, a manager who has knowledge of the networks or computers is needed.
2. In a wired communication environment, intentional connections from the outside to the network may be made. Figure 5 illustrates such a problem occurring in a home network, for example. That is, in a home 590 having a wired home network 580 in which an authentication server 500 and home network devices 540 and 542 are interconnected via a wire communication network, an external device 520 can be intentionally connected to a home network 580 through a wired network 585 accessible from the outside.
3. In a wireless communication environment, authentication information may be registered on a network by any authentication request wireless network device present in the other networks, because coverage of the wireless networks is not clearly distinguished. Figure 6 illustrates such a problem in a wireless home network, for example. That is, in a home 690 having a wireless home network in which an access point 600 and wireless network devices 640 and 642 are interconnected via a wireless link, a wireless link 685 may be established from an external device 620 to the wireless home network, because the coverage of wireless home networks is commonly not distinguished. Accordingly, authentication information not only on the wireless devices 640 and 642 present in the relevant wireless home network but also on the external wireless device 620 present in the other wireless networks may be registered.

Therefore, technical solutions for overcoming these related art problems are desired.

802.11b Wireless LAN Authentication Encryption, and Security (XP-002250118) discloses a Wired Equivalent Privacy (WEP) algorithm in which an authentication server generates session keys which are then communicated to an authenticator and a supplicant. The authenticator uses the session key to create a dynamic WEP key. The WEP key is then encrypted using the session key and communicated from the authenticator to the supplicant. The supplicant decrypts the WEP key using the session key and uses the key to encrypt and decrypt messages. This document forms the pre-characterising portion of the claims appended hereto.

According to the present invention there is provided an apparatus and method as set forth in the appended claims. Preferred features of the invention will be apparent from the dependent claims, and the description which follows.

The present invention allows a general user, who has no knowledge of authentication, computers and the like, to easily perform authentication for network devices, and also allows a user to safely and easily perform authentication for network devices by causing authentication information to be exchanged using an interface with a limited coverage so as to avoid any unauthenticated connection between network devices.

According to a first aspect of the present invention, there is provided a network system for authentication, characterised by comprising: a unique key generating device operable to generate unique keys; a first network device for requesting authentication; and a second network device for authentication; characterised by: the unique key generating device being arranged to transmit a first unique key to the first network device and a second unique key to the second network device through a private network having a limited coverage; the first network device being operable to transmit to the second network device the first unique key received through the private network from the unique key generating device and authentication information generated by the first network device; and the second network device being operable to compare the first unique key received from the first network device with the second unique key received over a private network from the unique key generating device, and registering the received authentication information received from the first network device thereon when both keys match.

According to a second aspect of the present invention, there is also provided method of authenticating network devices, comprising: transmitting authentication information generated by a network device; and receiving the authentication information; characterised in that the method comprises: transmitting a first unique key received over a private network having a limited coverage and the authentication information generated by the network device that has received the first unique key; receiving the first unique key and the authentication information; comparing the received first unique key with a second unique key received over the private network; and registering the received authentication information when both keys match.

According to a third aspect of the present invention, there is provided a network device for requesting authentication, comprising: a means for receiving a unique key generated by a unique key generating device; characterised in that the unique key is received over a private network having a limited coverage; and a means for transmitting the received unique key and authentication information generated by the network device.

According to a further aspect of the present invention, there is provided a network device for authentication, comprising: a means for receiving authentication information from a network device for requesting authentication; characterised by: the means for receiving authentication information being arranged for receiving a first unique key from the network device for requesting authentication; a means for receiving a second unique key generated by a unique key generating device over a private network having a limited coverage; a means for comparing the first unique key with the second unique key; and a means for registering the authentication information thereon when both keys match.

According to a still further aspect of the present invention, there is provided a first network device, comprising: a means for generating a unique key and transmitting the generated unique key; characterised in that: the generated unique key is transmitted over a private network having a limited coverage to a second network device for requesting authentication and a third network device for receiving an authentication request from the second network device.

For a better understanding of the invention, and to show how embodiments of the same may be carried into effect, reference will now be made, by way of example, to the accompanying diagrammatic drawings in which:
Figure 1 is a diagram illustrating a related art authentication process in a wired network environment;
Figure 2 is a diagram illustrating a related art authentication process in a wireless network environment;
Figure 3 is a diagram illustrating a related art authentication process in a client-server environment;
Figure 4 is a diagram illustrating an operating process between authenticated network devices after the authentication has been completed, according to the related art;
Figure 5 is a diagram showing problems in a related art wired home network;
Figure 6 is a diagram showing problems in a related art wireless home network;
Figure 7 is a diagram illustrating a process of transmitting authentication information through interface units of network devices according to an embodiment of the present invention;
Figure 8 is a diagram illustrating a process of transmitting authentication information through interface units of network devices using a repeater according to another embodiment of the present invention;
Figure 9 is a diagram illustrating a process of transmitting authentication information through interface units of network devices using a unique key according to a further embodiment of the present invention;
Figure 10 illustrates a format of an authentication information message for an authentication request network device according to an embodiment of the present invention;
Figure 11 is a process flowchart for illustrating an authentication method in an environment as shown in Figure 7;
Figure 12 is a process flowchart for illustrating an authentication method in an environment as shown in Figure 9;
Figure 13 is a diagram illustrating an operating process for network devices operating in a wired network environment after authentication has been completed, according to the present invention; and
Figure 14 is a diagram illustrating an operating process for network devices operating in a wireless network environment after authentication has been completed, according to the present invention.

Prior to a detailed description of the present invention, some definitions on terminologies provided herein are first discussed as follows:
1. Authentication information: Corresponds to information needed for authentication and includes information on an authentication request network device, authentication information identifier, etc.
2. Authentication information identifier: Corresponds to an identifier for discriminating whether a message to be transmitted contains authentication information.
3. SSID (Service Set Identifier): Corresponds to a unique identifier of 32-byte length, which is added to each header of packets transmitted over a wireless LAN.
4. Bluetooth: Corresponds to a wireless Internet connection scheme over a local area network.

Hereinafter, network devices a system for authentication and a method for authenticating network devices using such network devices according to a preferred embodiment of the present invention will be described with reference to the accompanying drawings.

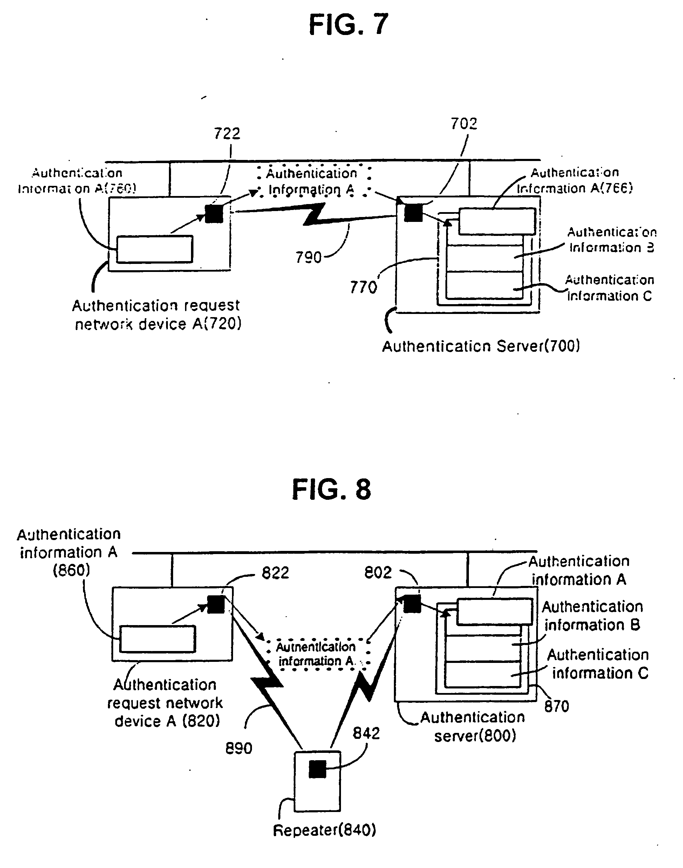

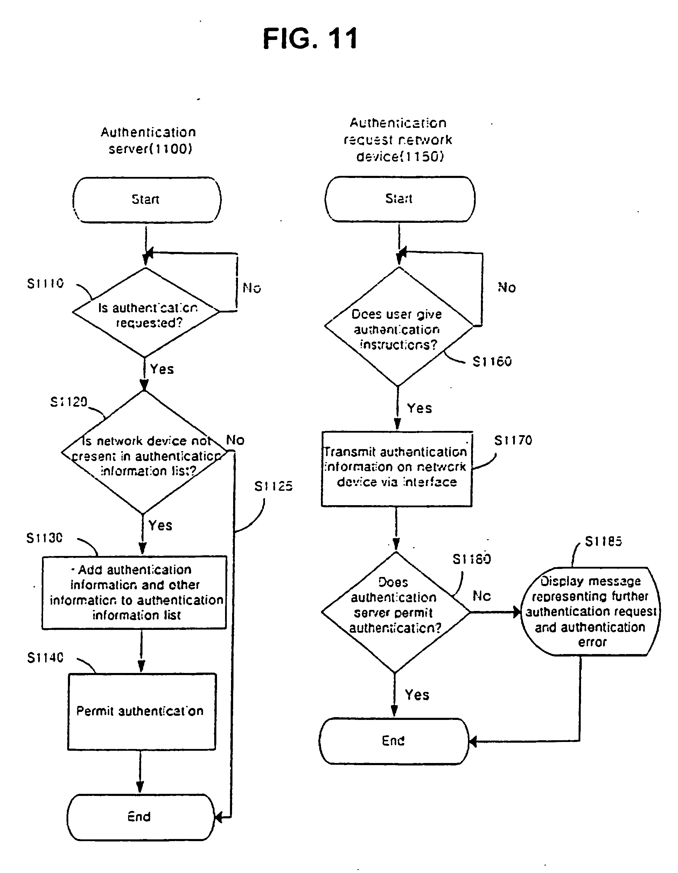

Figure 7 is a diagram illustrating a method for authenticating network devices which provides an introduction to the present invention. A user instructs a network device 720 to request authentication from an authentication server 700. Then, authentication information 760 on the authentication request network device 720 is transmitted to the authentication server 700 via an interface 722 of the network device 720 over a private network 790. At this time, the user may instruct to permit the authentication using an authentication button attached to the network device 720, an application program for authentication and the like. Interfaces 702 and 722 are wired/wireless interfaces with limited coverage and directivity, and include local area communication interfaces such as IrDA (Infra-red Data Association) communications and blue tooth communications, or wire cable interfaces such as serial/parallel cables with a closure property. The authentication server 700 checks whether an authentication information list 770 of the server contains the authentication information 766 received through the interface 702. If authentication information 766 is not present in the list, the server adds the authentication information 766 on the network device 720 to the authentication information list 770 and then completes the authentication process. Figure 11 is a process flowchart illustrating the authentication method shown in Figure 7, which will be described later.

Figure 8 is a diagram illustrating a method for authenticating network devices using a repeater. The repeater 840 simply receives authentication information 860 on an authentication request network device 820 via its own interface 842 over a private network 890 and sends the authentication information 860 to an interface 802 of an authentication server 800. The authentication server 800 checks whether the authentication information on the authentication request network device 820 from the repeater 840 is present in an authentication information list 870. If it is not present, the authentication server 800 adds the authentication information to the authentication information list 870 and completes the authentication process. At this time, the repeater may be used in the form of a remote control. According to this embodiment shown in Figure 8, a user can perform authentication for the authentication request network device 820 within a local area without directly contacting the authentication request network device 820.

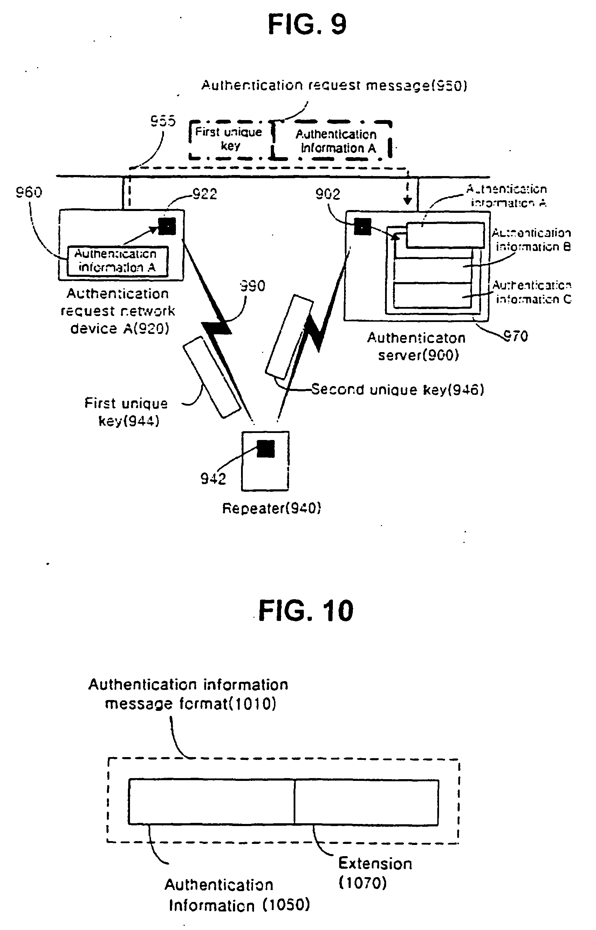

Figure 9 is a diagram illustrating a method for authenticating network devices using a unique key according to an embodiment of the present invention. A repeater 940 sends a first unique key 944 and a second unique key 946 via its own interface 942 over a private network 990 to an interface 922 of an authentication request network device 920 and an interface 902 of an authentication server 900, respectively. The authentication request network device 920 generates an authentication request message 950 using the first unique key 944 and authentication information 960 and sends the generated message 950 to the authentication server 900.

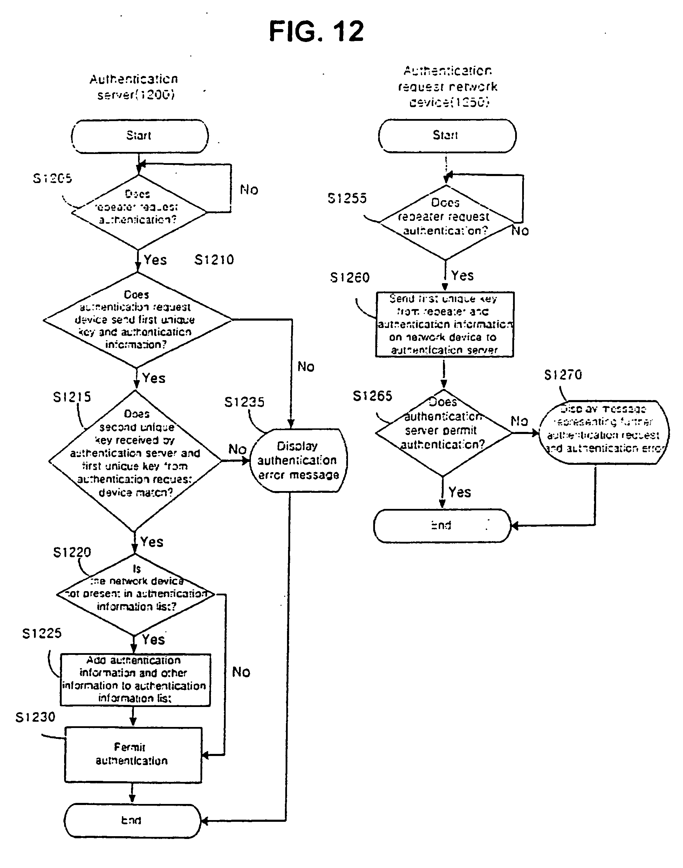

After receiving the authentication request message 950, the authentication server 900 compares the second unique key 946 to the first unique key 944 included in the authentication request message 950. If the two keys match, the authentication server checks whether the authentication information included in the authentication request message 950 is present in the authentication information list 970. Then, if it is not present, the authentication server adds the authentication information to the list and completes the authentication process. Figure 12 is a process flowchart illustrating the authentication method shown in Figure 9, which will be described later. According to this embodiment shown in Figure 9, the user can prevent intentional connection from the outside to the network by comparing the first unique key 944 with the second unique key 946 even while using the existing general network other than the private network.

Figure 10 illustrates a format of an authentication information message for an authentication request network device according to an embodiment of the present invention. The authentication information message 1010 includes authentication information 1050, and alternatively may include an extension 1070 in addition to the authentication information 1050. The authentication information 1050 may include information on the authentication request network device, information on the authentication information registering network device, an identifier for discriminating whether the message includes authentication information, and the like. The information on the authentication request network device may include a security key, an MAC (Medium Access Control) address, an SSID, etc. The authentication information message 1010 may include the extension 1070 to deliver any information other than the authentication information 1050.

Figure 11 is a process flowchart illustrating the authentication method shown in Figure 7. An authentication server 1100 checks whether there is an authentication request from an authentication request network device 1150 (S1110). If it is checked that there is an authentication request, the authentication server 1100 checks whether the authentication information about the authentication request network device 1150 is included in its own authentication information list (S1120). If the authentication information on the authentication request network device 1150 is not included in the authentication information list, the authentication server will not permit the authentication and completes the authentication process (S1125) . Otherwise, the authentication server adds the authentication information and the other information about the network device 1150 to the authentication information list (S1130) and permits the authentication (S1140).

On the other hand, the authentication request network device 1150 confirms whether a user issues authentication instructions (S1160). If the user issues authentication instructions, the authentication request network device sends its own authentication information via its own interface over a private network (S1170). Then, if the authentication server permits the authentication, the authentication process will be completed. Otherwise, a message for indicating a further authentication request or an authentication error can be displayed (S1185).

Figure 12 is a process flowchart illustrating the authentication method shown in Figure 9. An authentication server 1200 checks whether a repeater makes a request for authentication (S1205). If there is an authentication request from the repeater, the authentication server checks whether the authentication request network device 1250 sends a first unique key and authentication information to the server (S1210). Unless receiving the first unique key and the authentication information from the authentication request device 1250, the authentication server 1200 displays authentication error message or completes the authentication process (S1235). Otherwise, the authentication server 1200 compares the first unique key received from the authentication request device 1250 with a second unique key received from the repeater and then checks whether both keys match (S1215). If the two keys are the same, the authentication server 1200 checks whether authentication information from the authentication request device 1250 is included in an authentication information list of the authentication server. If the authentication information is included in the list, the authentication server permits the authentication (S1230). Otherwise, however, the authentication server adds the authentication information and the other information on the device 1250 to the authentication information list (S1225) and then permits the authentication (S1230). On the other hand, the authentication request network device 1250 confirms whether the repeater make a request for authentication (S1255). When the repeater has made a request for authentication, the network device 1250 sends the first unique key from the repeater and its own authentication information to the authentication server 1200 (S1260). Then, if the authentication server 1200 permits authentication, the authentication process will be completed. Otherwise, the server will display a message for indicating a further authentication request or an authentication error (S1270) and then completes the authentication process.

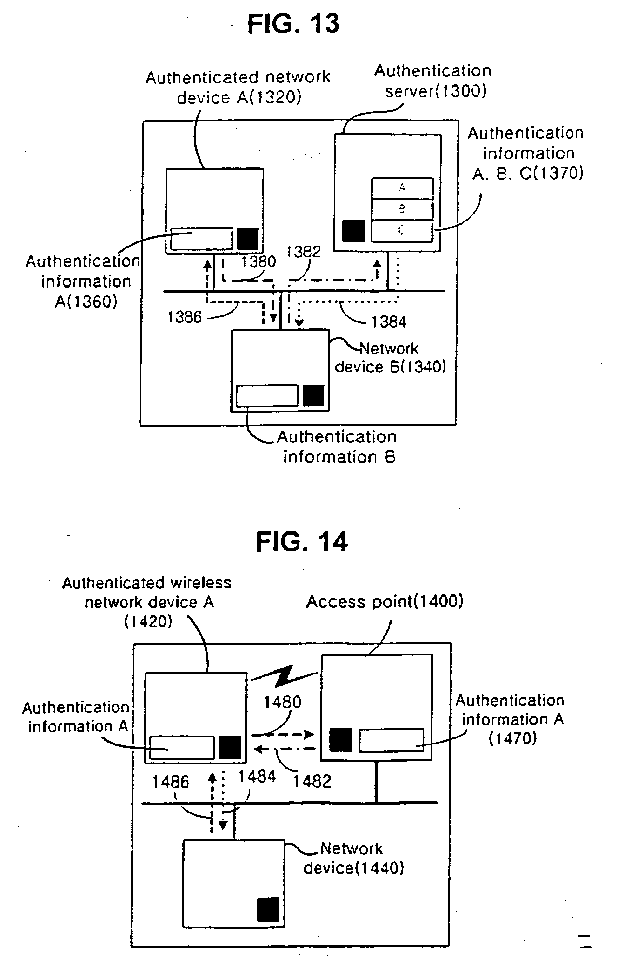

Figure 13 illustrates a process of operating authenticated network devices in a wired network environment according to an embodiment of the present invention. An authenticated network device A 1320 transmits a message including its own authentication information 1360 to communicate with another network device B 1340, as indicated by an arrow 1380. After receiving the message, the network device B 1340 transmits the authentication information contained in the received message to an authentication server 1300 and requests the server 1300 to confirm whether the network device A 1320 has been authenticated, as indicated by an arrow 1382. Then, the authentication server 1300 checks whether the authentication information contained in the received message is included in its own authentication information list 1370, and sends the result to the network device B 1340 that has requested confirmation, as indicated by an arrow 1384. Finally, the network device B 1340 confirms that the network device A 1320 has been authenticated and then communicates with the network device A, as indicated by an arrow 1386.

Figure 14 illustrates a process of operating authenticated network devices in a wireless network environment according to another embodiment of the present invention. The authenticated wireless network device 1420 sends, to an access point 1400, a request for connection to anther network device, as indicated by an arrow 1480. In response to the request, the access point 1400 authenticates the wireless network device 1420 using its own authentication information list 1470 and assigns a predetermined address to the wireless network device, as indicated by an arrow 1482. Then, the wireless network device 1420 sends the other network device 1440 a request for connection thereto, as indicated by an arrow 1484. Thus, the requested network device 1440 permits the connection, as indicated by an arrow 1486.

With the embodiments discussed above, the following advantages can be obtained.
1. In a network environment that is not managed by a manager, authentication for network devices can be done.
2. A general network user who has no knowledge of networks or authentication can easily perform an authentication process.
3. In a wired or wireless network environment, intentional unauthorized or accidental connection to the network or use of service can be easily and effectively prevented by a predetermined interface.

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A network system for authentication, **characterised by** comprising:
a unique key generating device (940) operable to generate unique keys (944,946);
a first network device (920) for requesting authentication; and
a second network device for authentication;
**characterised by**:
the unique key generating device (940) being arranged to transmit a first unique key (944) to the first network device (920) and a second unique key (946) to the second network device (900) through a private network (990) having a limited coverage;
the first network device (920) being operable to transmit to the second network device (900) the first unique key (944) received through the private network (990) from the unique key generating device (942) and authentication information (960) generated by the first network device (920); and
the second network device (900) being operable to compare the first unique key (944) received from the first network device (920) with the second unique key (946) received over the private network (990) from the unique key generating device (940), and registering the received authentication information (960) received from the first network device (920) thereon when both keys (944,946) match.

2. The network system as claimed in claim 1, wherein the authentication information (960) includes information on the first network device (920).

3. The network system as claimed in claim 1 or 2, wherein the authentication information (960) includes information on the second network device (900).

4. The network system as claimed in claim 1, 2 or 3, wherein the authentication information (960) includes an authentication information identifier.

5. A method of authenticating network devices, comprising:
transmitting authentication information (960) generated by a network device (920); and
receiving the authentication information (960);
**characterised in that** the method comprises:
transmitting a first unique key (944) received over a private network (990) having a limited coverage and the authentication information (960) generated by the network device (920) that has received the first unique key (944);
receiving the first unique key (944) and the authentication information (960);
comparing the received first unique key (944) with a second unique key (946) received over the private network (990); and
registering the received authentication information (960) when both keys (944,946) match.

6. The method as claimed in claim 5, wherein the authentication information (960) includes information on the network device (920) for transmitting the authentication information.

7. The method as claimed in claim 5 or 6, wherein the authentication information (960) includes information on a network device (900) for registering the authentication information.

8. The method as claimed in claim 5, 6 or 7, wherein the authentication information (960) includes an authentication information identifier.

9. A network device (920) for requesting authentication, comprising:
a means (922) for receiving a unique key (944) generated by a unique key generating device (940);
**characterised in that** the unique key is received over a private network (990) having a limited coverage; and
a means for transmitting the received unique key (944) and authentication information (960) generated by the network device (920).

10. A network device (900) for authentication, comprising:
a means (902) for receiving authentication information (960) from a network device (920) for requesting authentication;
**characterised by**:
the means (902) for receiving authentication information (960) being arranged for receiving a first unique key (944) from the network device (920) for requesting authentication;
a means (902) for receiving a second unique key (946) generated by a unique key generating device (940) over a private network (990) having a limited coverage;
a means for comparing the first unique key (944) with the second unique key (946); and
a means (970) for registering the authentication information (960) thereon when both keys (944,946) match.

11. The network device (920,900) as claimed in either claim 9 or 10, wherein the authentication information (960) includes information on the network device (920) for requesting authentication.

12. The network device (920,900) as claimed in claim 9, 10 or 11, wherein the authentication information (960) includes information on a network device (900) for registering authentication information (960).

13. The network device (920,900) as claimed in any of claims 9 to 12, wherein the authentication information (960) includes an authentication information identifier.

14. The network device (920,900) as claimed in any preceding claim, the means for receiving or the means for transmitting includes a transceiver unit (702,722) for local area communication.

15. The network device (920,900) as claimed in claim 14, wherein the local area communication includes IrDA communication.

16. The network device (920,900) as claimed in claim 14, wherein the local area communication includes Bluetooth communication.

17. The network device (920,900) as claimed in claim 14, wherein the local area communication includes wired serial communication.

18. The network device (920,900) as claimed in claim 14, wherein the local area communication includes wired parallel communication.

19. A first network device (940), comprising:
a means (942) for generating a unique key (944,946) and transmitting the generated unique key (944,946) ;
**characterised in that**:
the generated unique key (944,946) is transmitted over a private network (990) having a limited coverage to a second network device (920) for requesting authentication and a third network device (900) for receiving an authentication request (950) from the second network device (920).

## Patentansprüche

1. Netzwerksystem zur Authentifizierung, **gekennzeichnet durch** Umfassen:
einer Erzeugungsvorrichtung für eindeutige Schlüssel (940), die zum Erzeugen von eindeutigen Schlüsseln (944, 946) eingerichtet ist;
einer ersten Netzwerkvorrichtung (920) zum Anfordern einer Authentifizierung; und
einer zweiten Netzwerkvorrichtung zur Authentifizierung;
**gekennzeichnet durch**:
die Erzeugungsvorrichtung für eindeutige Schlüssel (940), die so angeordnet ist, dass sie einen ersten eindeutigen Schlüssel (944) zu der ersten Netzwerkvorrichtung (920) und einen zweiten eindeutigen Schlüssel (946) zu der zweiten Netzwerkvorrichtung (900) über ein privates Netzwerk (990) mit einer begrenzten Flächendeckung überträgt;
die erste Netzwerkvorrichtung (920), die so eingerichtet ist, dass sie zu der zweiten Netzwerkvorrichtung (900) den ersten eindeutigen Schlüssel (944), der über das private Netzwerk (990) von der Erzeugungsvorrichtung für eindeutige Schlüssel (942) empfangen wird, und Authentifizierungsinformationen (960), die von der ersten Netzwerkvorrichtung (920) erzeugt werden, überträgt; und
die zweite Netzwerkvorrichtung (900), die so eingerichtet ist, dass sie den ersten eindeutigen Schlüssel (944), der von der ersten Netzwerkvorrichtung (920) empfangen wird, mit dem zweiten eindeutigen Schlüssel (946), der über das private Netzwerk (990) von der Erzeugungseinrichtung für eindeutige Schlüssel (940) empfangen wird, vergleicht und die empfangenen Authentifizierungsinformationen (960), die von der ersten Netzwerkvorrichtung (920) empfangen werden, darauf registriert, wenn beide Schlüssel (944, 946) übereinstimmen.

2. Netzwerksystem nach Anspruch 1, wobei die Authentifizierungsinformationen (960) Informationen über die erste Netzwerkvorrichtung (920) enthalten.

3. Netzwerksystem nach Anspruch 1 oder 2, wobei die Authentifizierungsinformationen (960) Informationen über die zweite Netzwerkvorrichtung (900) enthalten.

4. Netzwerksystem nach Anspruch 1, 2 oder 3, wobei die Authentifizierungsinformationen (960) eine Authentifizierungsinformationen-Kennung enthalten.

5. Verfahren zum Authentifizieren von Netzwerkvorrichtungen, umfassend:
Senden von Authentifizierungsinformationen (960), die von einer Netzwerkvorrichtung (920) erzeugt werden; und
Empfangen von Authentifizierungsinformationen (960);
**dadurch gekennzeichnet, dass** das Verfahren Folgendes umfasst:
Senden eines ersten eindeutigen Schlüssels (944), der über ein privates Netzwerk (990) mit einer begrenzten Flächendeckung empfangen wird, und der Authentifizierungsinformationen (960), die von der Netzwerkvorrichtung (920) erzeugt werden, die den ersten eindeutigen Schlüssel (944) empfangen hat;
Empfangen des ersten eindeutigen Schlüssels (944) und der Authentifizierungsinformationen (960);
Vergleichen des empfangenen ersten eindeutigen Schlüssels (944) mit einem zweiten eindeutigen Schlüssel (946), der über das private Netzwerk (990) empfangen wird; und
Registrieren der empfangenen Authentifizierungsinformationen (960), wenn beide Schlüssel (944, 946) übereinstimmen.

6. Verfahren nach Anspruch 5, wobei die Authentifizierungsinformationen (960) Informationen über die Netzwerkvorrichtung (920) zum Senden der Authentifizierungsinformationen enthalten.

7. Verfahren nach Anspruch 5 oder 6, wobei die Authentifizierungsinformationen (960) Informationen über eine Netzwerkvorrichtung (900) zum Registrieren der Authentifizierungsinformationen enthalten.

8. Verfahren nach Anspruch 5, 6 oder 7, wobei die Authentifizierungsinformationen (960) eine Authentifizierungsinformationen-Kennung enthalten.

9. Netzwerkvorrichtung (920) zum Anfordern einer Authentifizierung, umfassend:
eine Einrichtung (922) zum Empfangen eines eindeutigen Schlüssels (944), der von einer Erzeugungsvorrichtung für eindeutige Schlüssel (940) erzeugt wird;
**dadurch gekennzeichnet, dass** der eindeutige Schlüssel über ein privates Netzwerk (990) mit einer begrenzten Flächendeckung empfangen wird; und
eine Einrichtung zum Senden des empfangenen eindeutigen Schlüssels (944) und der Authentifizierungsinformationen (960), die von der Netzwerkvorrichtung (920) erzeugt werden.

10. Netzwerkvorrichtung (900) zur Authentifizierung, umfassend:
eine Einrichtung (902) zum Empfangen von Authentifizierungsinformationen (960) von einer Netzwerkvorrichtung (920) zum Anfordern einer Authentifizierung;
**gekennzeichnet durch**:
die Einrichtung (902) zum Empfangen von Authentifizierungsinformationen (960), die so angeordnet ist, dass sie einen ersten eindeutigen Schlüssel (944) von der Netzwerkvorrichtung (920) zum Anfordern einer Authentifizierung empfängt;
eine Einrichtung (902) zum Empfangen eines zweiten eindeutigen Schlüssels (946), der von einer Erzeugungsvorrichtung für eindeutige Schlüssel (940) erzeugt wird, über ein privates Netzwerk (990) mit einer begrenzten Flächendeckung;
eine Einrichtung zum Vergleichen des ersten eindeutigen Schlüssels (944) mit dem zweiten eindeutigen Schlüssel (946); und
eine Einrichtung (970) zum Registrieren der Authentifizierungsinformationen (960) darauf, wenn beide Schlüssel (944, 946) übereinstimmen.

11. Netzwerkvorrichtung (920, 900) nach Anspruch 9 oder 10, wobei die Authentifizierungsinformationen (960) Informationen über die Netzwerkvorrichtung (920) zum Anfordern einer Authentifizierung enthalten.

12. Netzwerkvorrichtung (920, 900) nach Anspruch 9, 10 oder 11, wobei die Authentifizierungsinformationen (960) Informationen über eine Netzwerkvorrichtung (900) zum Registrieren von Authentifizierungsinformationen enthalten.

13. Netzwerkvorrichtung (920, 900) nach einem beliebigen der Ansprüche 9 bis 12, wobei die Authentifizierungsinformationen (960) eine Authentifizierungsinformationen-Kennung enthalten.

14. Netzwerkvorrichtung (920, 900) nach einem beliebigen vorhergehenden Anspruch, wobei die Einrichtung zum Empfangen oder die Einrichtung zum Senden eine Sender/Empfänger-Einheit (702, 722) für lokale Datenübertragung umfasst.

15. Netzwerkvorrichtung (920, 900) nach Anspruch 14, wobei die lokale Datenübertragung IrDA-Datenübertragung umfasst.

16. Netzwerkvorrichtung (920, 900) nach Anspruch 14, wobei die lokale Datenübertragung Bluetooth-Datenübertragung umfasst.

17. Netzwerkvorrichtung (920, 900) nach Anspruch 14, wobei die lokale Datenübertragung Kabel-Seriendatenübertragung umfasst.

18. Netzwerkvorrichtung (920, 900) nach Anspruch 14, wobei die lokale Datenübertragung Kabel-Paralleldatenübertragung umfasst.

19. Erste Netzwerkvorrichtung (940), umfassend:
eine Einrichtung (942) zum Erzeugen eines eindeutigen Schlüssels (944, 946) und zum Senden des erzeugten eindeutigen Schlüssels (944, 946);
**dadurch gekennzeichnet, dass**:
der erzeugte eindeutige Schlüssel (944, 946) über ein privates Netzwerk (990) mit einer begrenzten Flächendeckung zu einer zweiten Netzwerkvorrichtung (920) zum Anfordern einer Authentifizierung und von der zweiten Netzwerkvorrichtung (920) zu einer dritten Netzwerkvorrichtung (900) zum Empfangen einer Authentifizierungsanforderung (9550) gesendet wird.

## Revendications

1. Système de réseau pour l'authentification, **caractérisé en ce qu'**il comporte :
un dispositif de génération de clés uniques (940) opérationnel pour générer des clés uniques (944, 946),
un premier dispositif de réseau (920) pour demander une authentification, et
un deuxième dispositif de réseau pour l'authentification,
**caractérisé en ce que** :
le dispositif de génération de clés uniques (940) est conçu pour transmettre une première clé unique (944) au premier dispositif de réseau (920) et une seconde clé unique (946) au deuxième dispositif de réseau (900) via un réseau privé (990) ayant une couverture limitée,
le premier dispositif de réseau (920) est opérationnel pour transmettre au deuxième dispositif de réseau (900) la première clé unique (944) reçue via le réseau privé (990) en provenance du dispositif de génération de clés uniques (942) et des informations d'authentification (960) générées par le premier dispositif de réseau (920), et
le deuxième dispositif de réseau (900) est opérationnel pour comparer la première clé unique (944) reçue en provenance du premier dispositif de réseau (920) à la seconde clé unique (946) reçue sur le réseau privé (990) en provenance du dispositif de génération de clés uniques (940), et enregistrer les informations d'authentification reçues (960) reçues en provenance du premier dispositif de réseau (920) sur celui-ci lorsque les deux clés (944, 946) correspondent.

2. Système de réseau selon la revendication 1, dans lequel les informations d'authentification (960) incluent des informations sur le premier dispositif de réseau (920).

3. Système de réseau selon la revendication 1 ou 2, dans lequel les informations d'authentification (960) incluent des informations sur le deuxième dispositif de réseau (900).

4. Système de réseau selon la revendication 1, 2 ou 3, dans lequel les informations d'authentification (960) incluent un identifiant d'informations d'authentification.

5. Procédé d'authentification de dispositifs de réseau, comportant les étapes consistant à :
transmettre des informations d'authentification (960) générées par un dispositif de réseau (920), et
recevoir les informations d'authentification (960),
**caractérisé en ce que** le procédé comporte les étapes consistant à :
transmettre une première clé unique (944) reçue sur un réseau privé (990) ayant une couverture limitée et les informations d'authentification (960) générées par le dispositif de réseau (920) qui a reçu la première clé unique (944),
recevoir la première clé unique (944) et les informations d'authentification (960),
comparer la première clé unique reçue (944) à une seconde clé unique (946) reçue sur le réseau privé (990), et
enregistrer les informations d'authentification reçues (960) lorsque les deux clés (944, 946) correspondent.

6. Procédé selon la revendication 5, dans lequel les informations d'authentification (960) incluent des informations sur le dispositif de réseau (920) pour transmettre les informations d'authentification.

7. Procédé selon la revendication 5 ou 6, dans lequel les informations d'authentification (960) incluent des informations sur un dispositif de réseau (900) pour enregistrer les informations d'authentification.

8. Procédé selon la revendication 5, 6 ou 7, dans lequel les informations d'authentification (960) incluent un identifiant d'informations d'authentification.

9. Dispositif de réseau (920) pour demander une authentification, comportant :
des moyens (922) pour recevoir une clé unique (944) générée par un dispositif de génération de clés uniques (940),
**caractérisé en ce que** la clé unique est reçue sur un réseau privé (990) ayant une couverture limitée, et
des moyens pour transmettre la clé unique reçue (944) et les informations d'authentification (960) générées par le dispositif de réseau (920).

10. Dispositif de réseau (900) pour une authentification, comportant :
des moyens (902) pour recevoir des informations d'authentification (960) en provenance d'un dispositif de réseau (920) pour demander une authentification,
**caractérisé par** :
des moyens (902) pour recevoir des informations d'authentification (960) étant conçus pour recevoir une première clé unique (944) en provenance du dispositif de réseau (920) pour demander une authentification,
des moyens (902) pour recevoir une seconde clé unique (946) générée par un dispositif de génération de clés uniques (940) sur un réseau privé (990) ayant une couverture limitée,
des moyens pour comparer la première clé unique (944) à la seconde clé unique (946), et
des moyens (970) pour enregistrer les informations d'authentification (960) sur ceux-ci lorsque les deux clés (944, 946) correspondent.

11. Dispositif de réseau (920, 900) comme défini dans la revendication 9 ou 10, dans lequel les informations d'authentification (960) incluent des informations sur le dispositif de réseau (920) pour demander une authentification.

12. Dispositif de réseau (920, 900) selon la revendication 9, 10 ou 11, dans lequel les informations d'authentification (960) incluent des informations sur un dispositif de réseau (900) pour enregistrer des informations d'authentification (960).

13. Dispositif de réseau (920, 900) selon l'une quelconque des revendications 9 à 12, dans lequel les informations d'authentification (960) incluent un identifiant d'informations d'authentification.

14. Dispositif de réseau (920, 900) selon l'une quelconque des revendications précédentes, les moyens de réception ou les moyens de transmission incluent une unité de transmission-réception (702, 722) pour une communication locale.

15. Dispositif de réseau (920, 900) selon la revendication 14, dans lequel la communication locale inclut une communication IrDA.

16. Dispositif de réseau (920, 900) selon la revendication 14, dans lequel la communication locale inclut une communication Bluetooth.

17. Dispositif de réseau (920, 900) selon la revendication 14, dans lequel la communication locale inclut une communication série câblée.

18. Dispositif de réseau (920, 900) selon la revendication 14, dans lequel la communication locale inclut une communication parallèle câblée.

19. Premier dispositif de réseau (940), comportant :
des moyens (942) pour générer une clé unique (944, 946) et transmettre la clé unique générée (944, 946),
**caractérisé en ce que** :
la clé unique générée (944, 946) est transmise sur un réseau privé (990) ayant une couverture limitée à un deuxième dispositif de réseau (920) pour demander une authentification et à un troisième dispositif de réseau (900) pour recevoir une demande d'authentification (950) en provenance du deuxième dispositif de réseau (920).
